# EUROPÄISCHE PATENTANMELDUNG

(11) **EP 3 461 727 A1**
(43) Veröffentlichungstag der Anmeldung: **03.04.2019**
(21) Anmeldenummer: 18000757.7
(22) Anmeldetag: 25.09.2018
(51) Int. Cl.: B62J 9/00

(54) **FALT- UND ZUSAMMENROLLBARE ZWEIRADTASCHE**

(30) Priorität: 28.09.2017 DE 102017009369
(71) Anmelder: de-Quadros, Heike, 23966 Wismar (DE)
(72) Erfinder: de-Quadros, Heike, 23966 Wismar (DE)

(57) **Zusammenfassung**

Die Erfindung befasst sich mit einer leichten Zweiradtasche, wie z. B. von einem Fahrrad, e-Bike oder Pedelek, welche auf Grund des geringen Gewichtes sowie der durch Faltung und Rollung geringen Größe bei Nichtgebrauch, platzsparend aufbewahrt oder mitgenommen werden kann, wie zum Beispiel in einer Damenhandtasche oder einem ähnlichen Behältnis, und sich dadurch für den Einkauf mit oder ohne Fahrrad sowie als Reisebegleiter für spontane Zweiradtouren im Urlaub und Zuhause eignet. Die Tasche soll ein einfaches und schnelles Anbringen und Entnehmen am Gepäckträger des Zweirades ermöglichen, sowie die Fahrsicherheit nicht beeinträchtigen.

## Beschreibung

Zum Transport von verschiedenen Gütern an Zweirädern, wie zum Beispiel Fahrrad, e-bike oder Pedelec, ist es üblich diese mit einem Gepäckträger auszurüsten, welcher feste oder abnehmbare Zweiradtaschen aufnehmen können. Der Stauraum dieser Taschen soll die Güter vor Umwelteinflüssen schützen sowie einen sicheren Transport gewährleisten. Die Taschen sind meist aus einem festen und relativ unflexiblen Material, relativ schwer und lassen sich nur bedingt im unbenutzten Zustand verkleinern. Deshalb hat man sie für einen spontanen Einkauf entweder nicht dabei oder sie verbleiben sperrig und vor Diebstahl und Umwelteinflüssen ungeschützt am Zweirad. Auch die spontane Nutzung zum Beispiel an Leihrädern ist nicht möglich, da die herkömmlichen Zweiradtaschen abhängig vom jeweiligen Befestigungssystem des Herstellers sind.

Aus der DE 20 2014 005 226 U1 ist eine faltbare Fahrradtasche bekannt, die mit dem Fahrrad fest verbunden ist. Diese Tasche kann von einer gefalteten dreieckigen Grundform, bei Bedarf in eine oktaeterförmige Tasche entfaltet werden. Zum Schutz gegen Umwelteinflüsse sind ein wasserfestes Material und wasserfeste Reißverschlüsse vorgesehen. Nachteilig an dieser Tasche ist, dass sie bei Nichtgebrauch am Fahrrad verbleibt und so weder unabhängig vom Fahrrad noch an anderen Fahrrädern, zum Beispiel Leihrädern, genutzt werden kann.

Aus der US 4 125 213 A ist eine zusammenlegbare Transporttasche für Motorräder bekannt, für die ein flexibles Material vorgesehen ist. Diese Tasche ist abnehmbar gestaltet und kann unabhängig vom Motorrad verwendet werden. Nachteilig an dieser Tasche ist, dass sie im gefalteten Zustand ein zu großes Volumen aufweist um sie in einer anderen Tasche, zum Beispiel Damenhandtasche, unterzubringen.

] Aus der FR 2 274 495 A ist eine zusammenrollbare Tasche bekannt, welche jedoch für eine feste Verbindung mit einem Motorrad oder Fahrrad vor-gesehen ist. Nachteilig an dieser Tasche ist, dass sie am Fahrrad oder Motorrad verbleibt und so weder unabhängig vom Fahrrad wie z. B. von einem Leihrad, noch an anderen Zweirädern genutzt werden kann.

Aus der DE 94 19 888 U1 ist eine Befestigung für insbesondere zusammenrollbare Taschen für Fahrräder bekannt, welche zum Anbringen an einer im wesentlichen runden Strebe des Fahrrads vorgesehen ist. Diese Taschen können unter Verwendung eines Klettverschlusses mit dem Fahrrad verbunden werden. Nachteilig an den dazugehörigen Taschen ist, dass die Befestigung am Fahrrad verbleibt und deshalb nicht an anderen Fahrrädern, wie zum Beispiel Leihrädern, genutzt werden können

Aus der US 3 989 174 A ist eine faltbare, als Aktentasche nutzbare Tasche bekannt, welche auch an Fahrrädern angebracht werden kann. Nachteilig an dieser Tasche ist, dass sie im gefalteten Zustand die Abmessungen wie für eine Aktentasche üblich beibehält.

Aus der DE 20 2008 006 246 U1 ist eine faltbare Tasche bekannt, deren Material und Faltung es ermöglichen soll, diese Tasche in einer Damenhandtasche oder in einer Mantel- oder Jackentasche mitzunehmen. Nachteilig an dieser Tasche ist, dass eine sichere Befestigung an einem Fahrrad weder vorgesehen noch möglich ist.

Die Aufgabe dieser Erfindung besteht darin, eine leichte von einem Zweirad abnehmbare Zweiradtasche zu entwickeln, welche bei Nichtgebrauch am Zweirad, wie z. B. an einem Fahrrad, e-bike oder Pedelec, zusammenlegbar und zusammenrollbar sein soll, und welche in einer Tasche, zum Beispiel auch in einer Damenhandtasche, transportiert und jeder Zeit als Zweiradtasche oder auch als normale Einkaufstasche zur Verfügung stehen kann. Die Tasche soll ein einfaches und schnelles Anbringen und Entnehmen am Gepäckträger ermöglichen, sowie die Fahrsicherheit nicht beeinträchtigen.

Erfindungsgemäß wird die Aufgabe durch eine Falt- und zusammenrollbare Zweiradtasche, welche vom Zweirad abnehmbar und damit unabhängig vom Zweirad verwendbar ist, gelöst, wobei zwei Taschen (1) über einen Verbindungssteg (2), der an seiner Oberseite zwei Befestigungslaschen (3) und an seiner Unterseite eine Sicherungslasche (8) aufweisen kann, miteinander verbunden werden können, und dass an den Vorderseiten (4) und an den Rückseiten (5) der Taschen (1) mit Steckverbindern (10) versehene Befestigungsgurte (9) angeordnet werden können, und dass die Faltung der Taschen (1) an der Mittellinie der Längsseite und an der Mittellinie der Schmalseite erfolgen kann, und dass die so gefalteten Taschen (1) zusammengerollt werden können.

Die Taschen (1) können im ungenutzten und eingerollten Zu-stand durch eine Sicherungslasche (8) sicher im eingerollten Zustand gehalten werden kann.

Es werden leichte sowie ultraleichte Materialen mit einem Flächengewicht gleich oder kleiner als 120 g/m2 verwendet.

Für die Rückseite (5) der Tasche ein Material mit einem Flächengewicht gleich oder kleiner als 320 g/m2 verwendet wird.

Die Bodeneinlage (11) kann mit einem Scharnier (12) ver-sehen sein.

Die Erfindung wird nun an Hand einer bevorzugten Ausführung der Erfindung näher erläutert, wobei die
Fig. 1: Aufbau der Zweiradtasche
Fig. 2 und Fig. 3: Die Befestigung der Zweiradtaschen auf dem Gepäckträger
Fig. 4: Querschnitt vom Aufbau des Taschenbodens
Fig. 5: Längsschnitt vom Ausbau des Taschenbodens
Fig. 6: Sicherung der Zweiradtasche am Zweiradrahmen
Fig. 7: Aufbau der Tragegriffe im offenen und geschlossenen Zustand
Fig. 8: Die zum Falten und Aufrollen vorgesehenen Zweiradtaschen
Fig. 9: Die entlang der Mittellinie der Längsseite gefaltete Zweiradtasche
Fig. 10: Die entlang der Mittellinie der Schmalseite gefaltete Zweiradtasche
Fig. 11: Die gefaltete und gerollte Zweiradtasche
darstellen und
- 1: Tasche
- 2: Verbindungssteg
- 3: Befestigungslaschen
- 4: Vorderseite
- 5: Rückseite
- 6: Seitenteil
- 7: Taschenboden
- 8: Sicherungslasche
- 9: Befestigungsgurte
- 10: Steckverbinder
- 11: Bodeneinlage
- 12: Scharnier
- 13: Gepäckträger
- 14: Gepäckträgerklappe
- 15: Tragegriff
- 16: Klettverschluss
- 17: Rückseitenverstärkung
- 18: Zweiradgestänge
bedeuten.

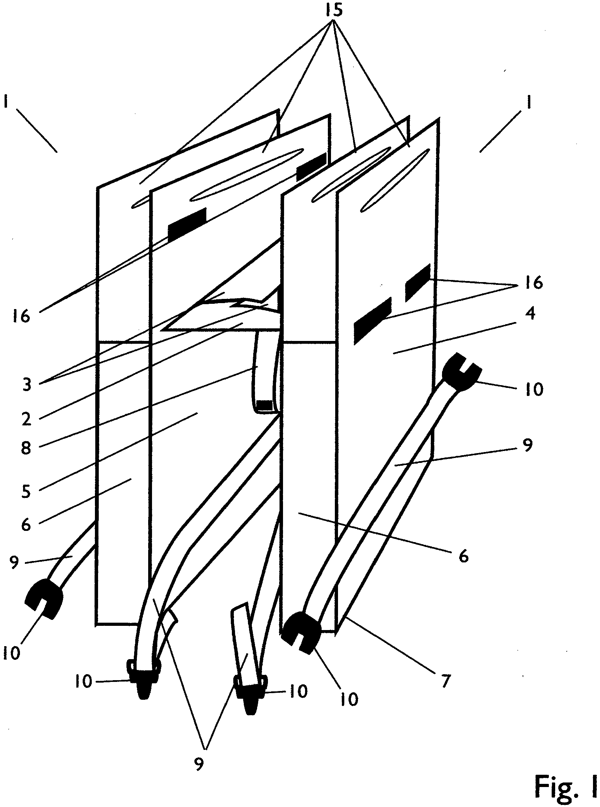

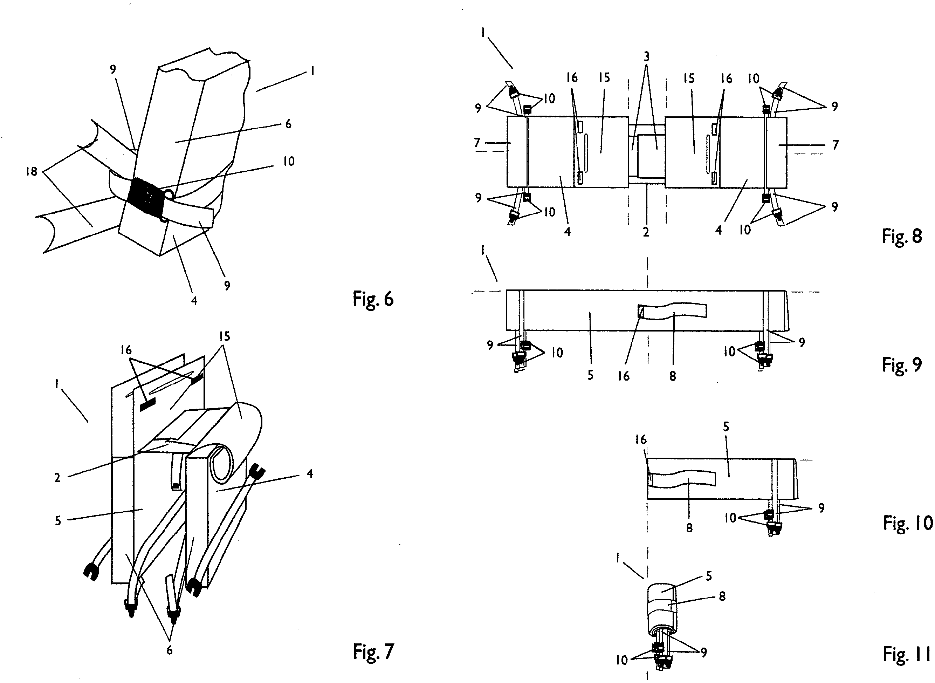

Wie aus Fig. 1 zu erkennen ist, bestehen die Taschen 1 der Erfindung, aus einer Vorderseite 4, einer Rückseite 5, sowie aus zwei, die Vorder- und Rückseite verbindenden Seitenteilen 6. Die Rückseite 5 ist durch eine geeignete Wahl des Materials versteift. Die beiden Taschen 1 können über einen Verbindungssteg 2 miteinander fest verbunden werden. Der Verbindungssteg 2 kann auf seiner Oberseite mit zwei Befestigungslaschen 3 haben, welche vorzugsweise mit Klettverschlüssen versehen werden können. Auf der Unterseite des Verbindungsstegs 2 ist außerdem eine Sicherungslasche 8 angebracht, mit welcher die aufgerollten Taschen 1 fixiert werden können (vergleiche hierzu auch Fig. 11). An der Vorderseite 4 und an der Rückseite 5 der Taschen 1 sind Befestigungsgurte 9 angebracht, welche an ihren freien Enden mit Steckverbindern 10 versehen werden können. Diese Befestigungsgurte 9 dienen der zusätzlichen Sicherung der Taschen 1 am Zweiradrahmen 18 (siehe hierzu Fig. 6). Alle Teile der Taschen 1 können durch nähen, kleben oder schweißen miteinander verbunden werden.

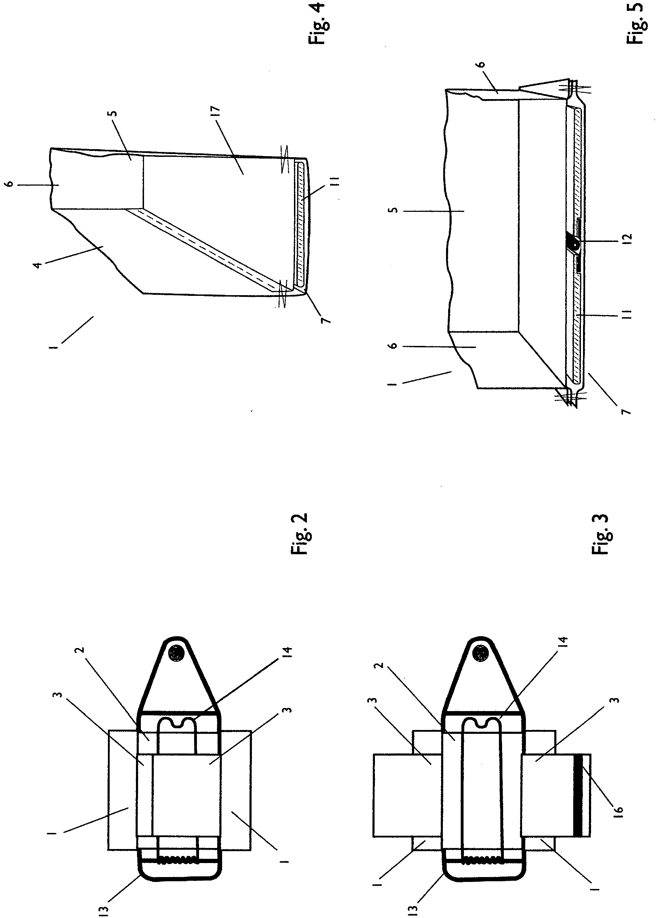

Die Fig. 4 und Fig. 5 zeigen den Taschenboden 7 mit einer zweiteiligen über ein Scharnier 12 faltbar miteinander verbundenen, vorzugsweise aus Kunststoff hergestellten Bodeneinlage 11. Diese Bodeneinlage 11 kann die Taschen 1 vor einer eventuellen ungewollten Faltung beim Anbringen und Abnehmen am Rad, und bei Luftströmungen während der Fahrt und einer daraus resultierenden eventuellen Blockierung des Hinterrades sichern.

Die Fig. 2 und Fig. 3 zeigen die Anordnung der Taschen 1 auf dem Gepäckträger 13. Der Verbindungssteg 2 der Taschen 1 liegt mit seiner Unterseite auf dem Gepäckträger 13 auf. Die Oberseite des Verbindungssteges 2 weist zur Gepäckträgerklappe 14. Über der Gepäckträgerklappe 14 können die Befestigungslaschen 3 vorzugsweise mittels Klettverschluss miteinander verbunden werden. Durch die Gepäck-trägerklappe 14 und die miteinander verbundenen Befestigungslaschen 3 können die Taschen 1 gegen ein Verrutschen gesichert werden.

Die Fig. 4 und Fig. 5 zeigen den Taschenboden 7 mit einer zweiteiligen über ein Scharnier 12 faltbar miteinander verbundenen, vorzugsweise aus Kunststoff hergestellten Bodeneinlage 11. Diese Bodeneinlage 11 kann die Taschen 1 vor einer eventuellen ungewollten Faltung beim Anbringen und Abnehmen am Rad, und bei Luftströmungen während der Fahrt und einer daraus resultierenden eventuellen Blockierung des Hinterrades sichern.

Wie aus Fig. 7 ersichtlich, können die Tragegriffe 15 in zwei verschieden Positionen genutzt werden. Einmal können sie im eingerollten Zustand als Verschluss der Taschen 1 dienen. Dieser Zustand wird vorzugsweise durch Klettverschlüsse 16 gehalten (siehe auch Fig. 1). Zum anderen können die Tragegriffe 15 im offenen Zustand für den Gebrauch der Taschen 1 als Einkaufstaschen genutzt werden.

Die Fig. 8 bis Fig. 10 zeigen eine mögliche Faltung der Taschen 1. Die Faltung der Taschen 1 kann zunächst durch eine Faltung entlang der Mittellinie der Längsseite erfolgen (Fig. 9) und danach durch eine Faltung entlang der Mittellinie der Schmalseite vorgenommen werden (Fig. 10). Die Befestigungsgurte 9 liegen, wie aus Fig. 9 und Fig. 10 ersichtlich ist, dabei übereinander. Die Sicherungslasche 8 liegt außen.

Wie aus Fig. 11 zu entnehmen ist, können die gefalteten Taschen 1 von der Seite der Befestigungs-gurte 9 zur Mittelinie der Schmalseite hin aufgerollt und dann mittels der Sicherungslasche 8 fixiert werden.

## Patentansprüche

1. Falt- und zusammenrollbare Zweiradtasche, welche vom Zweirad abnehmbar und damit unabhängig vom Zweirad verwendbar ist, **dadurch gekennzeichnet, dass** zwei Taschen (1) über einen Verbindungssteg (2), der an seiner Oberseite zwei Befestigungslaschen (3) und an seiner Unterseite eine Sicherungslasche (8) aufweisen kann, miteinander verbunden werden können, und dass an den Vorderseiten (4) und an den Rückseiten (5) der Taschen (1) mit Steckverbindern (10) versehene Befestigungsgurte (9) angeordnet werden können, und dass die Faltung der Taschen (1) an der Mittellinie der Längsseite und an der Mittellinie der Schmalseite erfolgen kann, und dass die so gefalteten Taschen (1) zusammengerollt werden können.

2. Falt- und zusammenrollbare Zweiradtasche nach Anspruch 1, **dadurch gekennzeichnet, dass** die Taschen (1) im ungenutzten und eingerollten Zustand durch eine Sicherungslasche (8) sicher im eingerollten Zustand gehalten werden kann.

3. Falt- und zusammenrollbare Zweiradtasche nach Anspruch 1, **dadurch gekennzeichnet, dass** leichte sowie ultraleichte Materialen mit einem Flächengewicht gleich oder kleiner als 120 g/m2 verwendet werden können.

4. Falt- und zusammenrollbare Zweiradtasche nach Anspruch 1, **dadurch gekennzeichnet, dass** für die Rückseite (5) der Tasche ein Material mit ei nem Flächengewicht gleich oder kleiner als 320 g/m2 verwendet wird.

5. Falt- und zusammenrollbare Zweiradtasche nach Anspruch 1, **dadurch gekennzeichnet, dass** die Bodeneinlage (11) mit einem Scharnier (12) ver¬sehen sein kan
